# EUROPEAN PATENT SPECIFICATION

(11) **EP 2 657 112 B1**
(45) Date of publication and mention of the grant of the patent: **16.05.2018**
(21) Application number: 12183266.1
(22) Date of filing: 06.09.2012
(51) Int. Cl.: B62H 1/04, B62J 25/00, B62K 11/04, F01M 11/12, B62K 11/10

(54) **Saddle-ride type vehicle**
Fahrzeug mit Sattel
Véhicule à monture de selle

(30) Priority: 27.04.2012 JP 2012103609
(43) Date of publication of application: 30.10.2013
(73) Proprietor: Yamaha Hatsudoki Kabushiki Kaisha, Iwata-shi, Shizuoka 438-8501 (JP)
(72) Inventor: Gotanda, Takehiko, Iwata-shi, Shizuoka 438-8501 (JP)
(74) Representative: Grünecker Patent- und Rechtsanwälte PartG mbB

(56) References cited:
- EP-A1- 2 347 949
- EP-A1- 2 573 353
- WO-A1-2011/027446
- CN-A- 101 424 210
- FR-A1- 2 751 029
- JP-A- 2009 132 356

## Description

The present invention relates to a saddle-ride type vehicle comprising a vehicle body frame, an engine pivotably supported with respect to the vehicle body frame, a radiator disposed laterally to the engine, an outer exhaust pipe connected to the engine, the outer exhaust pipe is backwardly extended from the engine, a muffler disposed rearwards of the radiator, the muffler is connected to the outer exhaust pipe, and a rear wheel disposed behind the engine, wherein the radiator includes a radiator main body and a radiator cap attached to a top surface of the radiator main body. A center axis of a main body pipe portion of the muffler is extended rearwards and obliquely upwards. Such a saddle-ride type vehicle can be taken from the prior art document EP 2 347 949 A1 or CN 101 424 210 A, wherein a front end of the muffler is positioned lower than a bottom surface of the radiator main body, and the rear end of the muffler extends further rearward over the rear wheel in a vehicle side view.

Some saddle-ride type vehicles are equipped with a unit swing type engine unit. The unit swing structure refers to a structure that the engine unit and a muffler are pivotably attached to a vehicle body frame. Further, some saddle-ride type vehicles have a structure that a radiator is disposed laterally to the engine. For example, JP 2010 076750 A describes a motorcycle equipped with a unit swing type engine unit including a radiator disposed laterally to an engine.

In a unit swing type engine unit, a radiator is normally attached to an engine when disposed laterally to the engine. In this case, the contour of the engine is enlarged due to an attachment portion disposed on the engine for attaching the radiator thereto. Accordingly, a muffler is disposed further rearwards than a muffler where the radiator is not disposed laterally to the engine. Distance is increased between the rear end of the muffler and the pivot center of the engine unit as the position of the muffler is shifted rearwards. Therefore, load acting on a support structure of the engine unit is increased in pivoting the engine unit. Strength of the support mechanism of the engine unit is required to be enhanced when the load acting on the support mechanism of the engine unit is increased. A drawback is consequently produced that the engine unit size is enlarged.

It is an object of the present invention to provide a saddle-ride type vehicle that inhibits size increase of an engine unit in a saddle-ride type vehicle equipped with a radiator disposed laterally to an engine. According to the present invention said object is solved by a saddle-ride type vehicle having the features of independent claim 1. Preferred embodiments are laid down in the dependent claims.

A saddle-ride type vehicle includes a vehicle body frame, an engine, a radiator, an outer exhaust pipe, a muffler and a rear wheel. The engine is pivotably supported with respect to the vehicle body frame. The radiator disposed laterally to the engine. The outer exhaust pipe is connected to the engine, while being backwardly extended from the engine. The muffler is disposed rearwards of the radiator. The muffler is connected to the outer exhaust pipe while being supported by the engine. The rear wheel is disposed behind the engine. The radiator includes a radiator main body and a radiator cap. The radiator cap is attached to a top surface of the radiator main body. In a vehicle side view, an intersection between the muffler and a conceptual extended line of the top surface of the radiator main body is positioned forwards of a conceptual vertical line that passes through a rotary center of the rear wheel while being arranged perpendicularly to the conceptual extended line. A front end of the muffler is positioned higher than a conceptual extended line of a bottom surface of the radiator main body. A rear end of the muffler is overlapped with the rear wheel in a vehicle side view.

In the saddle-ride type vehicle, an intersection between the muffler and a conceptual extended line of a top surface of the radiator cap is positioned forwards of the conceptual vertical line in a vehicle side view.

In the saddle-ride type vehicle, the rear end of the muffler is positioned rearwards of the conceptual vertical line while being positioned higher than a conceptual parallel line in a vehicle side view. The conceptual parallel line passes through the rotary center of the rear wheel while being arranged in parallel to the conceptual extended line.

In the saddle-ride type vehicle, the muffler includes an inner exhaust pipe and an outer pipe. The inner exhaust pipe is connected to the outer exhaust pipe. The outer pipe accommodates the inner exhaust pipe. The rear wheel includes a tire and a wheel fitted with the tire. A rear end of the outer pipe is positioned radially inside an inner peripheral surface of the wheel in a vehicle side view.

In the saddle-ride type vehicle, the radiator includes a radiator fan. An intersection between a center axis of the muffler and a conceptual line connecting a rotary center of the radiator fan and the rotary center of the rear wheel is positioned forwards of the rotary center of the rear wheel in a vehicle side view.

In the saddle-ride type vehicle, the rear end of the muffler is positioned higher than a top end of the engine in a vehicle side view.

The saddle-ride type vehicle further includes a tandem footrest disposed for changing a posture thereof between a deployed state and a retracted state. The tandem footrest is positioned outwards of the radiator in a vehicle transverse direction. An outer lateral end of the muffler is positioned inwards of an inner lateral end of a footrest surface of the tandem footrest of the deployed state in the vehicle transverse direction.

The saddle-ride type vehicle further includes an oil level gauge for checking an oil level of the engine. The oil level gauge is disposed behind the radiator. The front end of the muffler is disposed under the oil level gauge in a vehicle side view.

In the saddle-ride type vehicle, the muffler includes an opening portion and a circular cone portion. The opening portion receives the outer exhaust pipe connected thereto. The circular cone portion has a shape with a diameter reduced towards the opening portion. The circular cone portion is positioned behind the oil level gauge in a vehicle side view.

The saddle-ride type vehicle further includes a foldable type vehicle stand. The vehicle stand is disposed under the engine. The circular cone portion is disposed over the vehicle stand of a folded state in a vehicle side view.

In the saddle-ride type vehicle, the front end of the muffler is positioned higher than the bottom end of the radiator.

### <Advantageous Effects of Invention>

The front end of the muffler is positioned higher than the conceptual extended line of the bottom surface of the radiator main body. Further, the rear end of the muffler is overlapped with the rear wheel in a vehicle side view. Therefore, the muffler is disposed while being slanted with respect to the horizontal direction at an angle steeper than that of a well-known muffler. Accordingly, distance is reduced between the rear end of the muffler and the pivot center of the engine unit. The load acting on the support structure of the engine unit is thereby reduced. As a result, increase in size of the engine unit can be inhibited. It should be noted that the bank angle of the vehicle may be reduced when the front end of the muffler is positioned low in disposing the muffler in a slanted state at an angle steeper than that of a well-known muffler. In the saddle-ride type vehicle according to the present aspect, however, the front end of the muffler is positioned higher than the conceptual extended line of the bottom surface of the radiator main body. Therefore, reduction in the bank angle can be inhibited.

The muffler is disposed while being slanted with respect to the horizontal direction at an angle steeper than that of a well-known muffler.

The rear end of the muffler is disposed forwards of a well-known position thereof.

The rear end of the outer pipe of the muffler is disposed forwards of a well-known position thereof.

The muffler is disposed while being slanted with respect to the horizontal direction at an angle steeper than that of a well-known muffler.

The muffler is disposed while being slanted with respect to the horizontal direction at a steeper angle than the angle of a well-known muffler.

The muffler can be inhibited from being protruded in the vehicle transverse direction. Therefore, it is possible to easily achieve sufficient support strength of the muffler.

Degradation in accessibility to the oil level gauge can be inhibited while flexibility in arrangement of muffler can be enhanced.

The muffler can be disposed closer to the oil lever gauge while degradation in accessibility to the oil level gauge can be inhibited.

The muffler can be inhibited from interfering with actions of the vehicle stand while flexibility in arrangement of the muffler can be enhanced.

Reduction in the bank angle can be inhibited.

### BRIEF DESCRIPTION OF THE DRAWINGS

Referring now to the attached drawings which form a part of this original disclosure:
FIG. 1 is a side view of a saddle-ride type vehicle according to an exemplary embodiment of the present invention;
FIG. 2 is a cross-sectional view of a muffler;
FIG. 3 is a cross-sectional view of the muffler of FIG. 2 sectioned along a line III-III;
FIG. 4 is a side view of a part of the saddle-ride type vehicle;
FIG. 5 is a plan view of a part of the saddle-ride type vehicle seen from a bottom side;
FIG. 6 is a rear view of a part of the saddle-ride type vehicle; and
FIG. 7 is a side view of a part of the saddle-ride type vehicle in a deployed state of a vehicle stand.

### DETAILED DESCRIPTION OF THE EMBODIMENTS

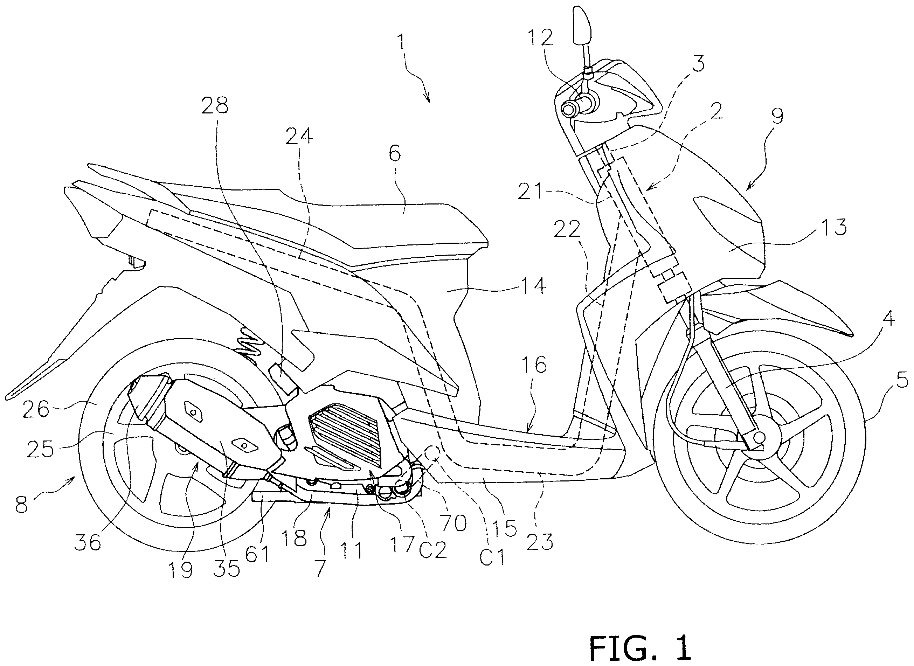

A saddle-ride type vehicle according to an exemplary embodiment will be hereinafter explained with reference to the drawings. FIG. 1 is a side view of a saddle-ride type vehicle 1 according to the present exemplary embodiment. The saddle-ride type vehicle 1 is a scooter-type motorcycle. The saddle-ride type vehicle 1 includes a vehicle body frame 2, a steering shaft 3, a front fork 4, a front wheel 5, a seat 6, an engine unit 7, a rear wheel 8 and a vehicle body cover 9. It should be noted in the present exemplary embodiment that the "a back-and-forth direction" refers to a vehicle longitudinal direction seen from a rider seated on the seat 6 unless otherwise particularly explained. "A right-and-left direction" refers to a vehicle transverse direction seen from a rider seated on the seat 6. "A front view" and "a side view" respectively refer to a vehicle front view and a vehicle side view. Further, in the present exemplary embodiment, "laterally outwards" means a direction away from a vehicle center line that is extended in the back-and-forth direction while passing through the vehicle center in the vehicle transverse (width) direction, whereas "laterally inwards" means a direction closer to the vehicle center line that is extended in the back-and-forth direction while passing through the vehicle center in the vehicle transverse direction.

The vehicle body frame 2 is formed by pipes made of iron. The vehicle body frame 2 includes a head pipe portion 21, a down frame portion 22, an under frame portion 23 and a rear frame portion 24. It should be noted that the vehicle body frame 2 may be integrally formed by means of, for instance, bending, or alternatively, may be formed by integrating a plurality of components by means of, for instance, welding. The head pipe portion 21 is positioned in the vehicle center in the vehicle transverse direction. The steering shaft 3 is rotatably inserted into the head pipe portion 21. A handle portion 12 is coupled to the upper portion of the steering shaft 3. The front fork 4 is coupled to the lower portion of the steering shaft 3. The front fork 4 supports the front wheel 5 in a rotatable state.

The down frame portion 22 is connected to the head pipe portion 21. The down frame portion 22 is downwardly extended from the head pipe portion 21. The under frame portion 23 is connected to the bottom end of the down frame portion 22. The under frame portion 23 is backwardly extended from the down frame portion 22. The rear frame portion 24 is connected to the rear end of the under frame portion 23. The rear frame portion 24 is extended obliquely rearwards and upwards from the rear end of the under frame portion 23. The seat 6 is disposed over the rear frame portion 24. The seat 6 is positioned rearwards of the head pipe portion 21. The seat 6 is supported by the vehicle body frame 2.

The vehicle body cover 9 includes a front portion cover 13, a rear portion cover 14 and an under over 15. The front portion cover 13 mainly covers the surrounding of the head pipe portion 21 and the down frame portion 22. The rear portion cover 14 is positioned under the seat 6. The rear portion cover 14 covers the front side and the both lateral sides of the rear frame portion 24. The under cover 15 is positioned between the front portion cover 13 and the rear portion cover 14 in the back-and-forth direction. The under cover 15 couples the front portion cover 13 and the rear portion cover 14. The under cover 15 includes a footboard 16.

The footboard 16 is positioned between the front wheel 5 and the seat 6 in the back-and-forth direction. The footboard 16 is disposed forwards of and lower than the seat 6. The footboard 16 is disposed in front of the engine unit 7. The footboard 16 is a surface on which a rider seated on the seat 6 puts his/her feet during travelling. The footboard 16 is positioned over the under frame portion 23. The footboard 16 is positioned between the down frame portion 22 and the rear frame portion 24 in the back-and-forth direction. The footboard 16 has an entirely flat shape in the vehicle transverse direction. The expression "the footboard 16 is flat" herein means that the footboard 16 is flat to the extent of allowing a rider to put his/her feet on any portion thereof. In other words, a convexo-concave may be formed on the footboard 16 for an antiskid purpose or etc.

The engine unit 7 is disposed under the seat 6. The engine unit 7 is supported by the vehicle body frame 2. The engine unit 7 is pivotably attached to the vehicle body frame 2 through a link mechanism 70. As illustrated in FIG. 1, the engine unit 7 and the link mechanism 70 are specifically configured to pivot about a pivot center C1 with respect to the vehicle body frame 2. Further, the engine unit 7 is configured to pivot about a pivot center C2 with respect to the link mechanism 70. The engine unit 7 supports the rear wheel 8 in a rotatable state. The engine unit 7 and the rear wheel 8 form a unit swing structure that is pivotable with respect to the vehicle body frame 2. The engine unit 7 includes an engine 11, a radiator 17, an outer exhaust pipe 18 and a muffler 19.

The engine 11 is pivotably attached to the vehicle body frame 2. The engine 11 is embedded with, for instance, an electric controlled fuel injection. The radiator 17 is disposed laterally to the engine 11. The outer exhaust pipe 18 is connected to the engine 11, while being backwardly extended from the engine 11. The muffler 19 is disposed rearwards of the radiator 17. The muffler 19 is connected to the outer exhaust pipe 18, while being supported by the engine 11. The muffler 19 is disposed laterally to the rear wheel 8. The rear wheel 8 is disposed behind the engine 11. The rear wheel 8 includes a rim 25 and a tire 26 attached to the rim 25.

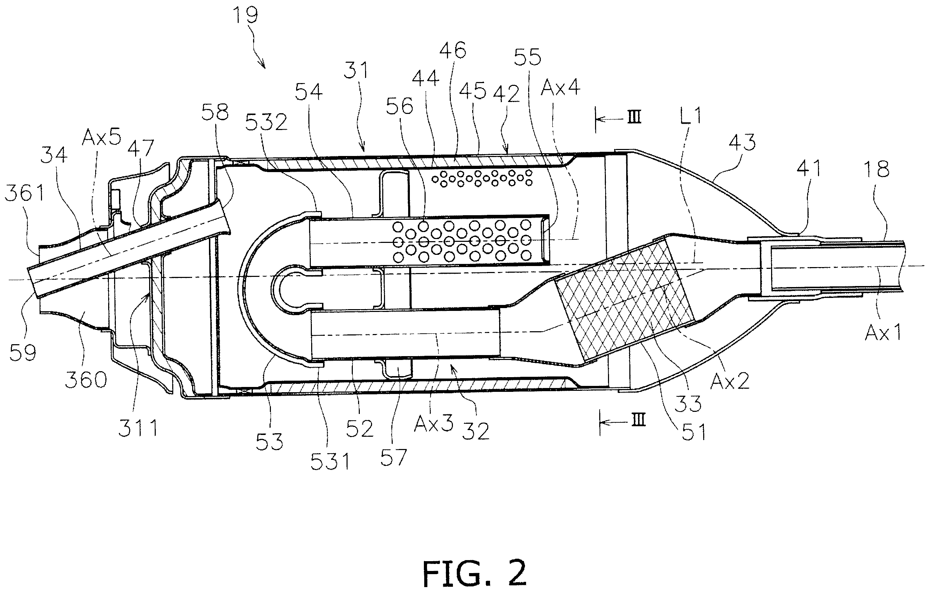

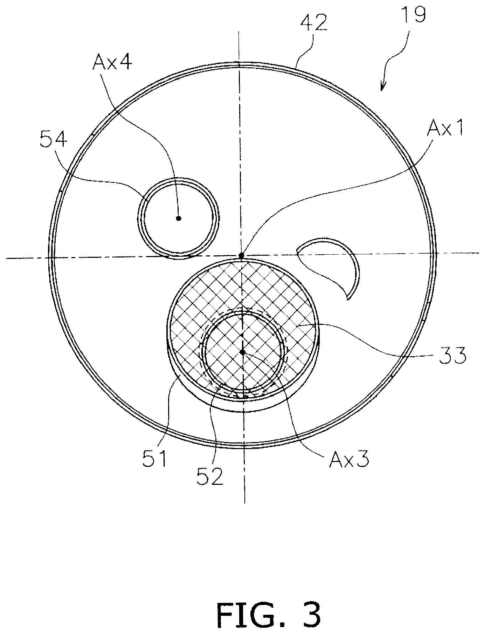

Next, the structure of the muffler 19 will be explained in detail. FIG. 2 is a cross-sectional view of the muffler 19. FIG. 3 is a cross-sectional view of FIG. 2 sectioned along a line III-III. It should be noted that FIG. 2 is a development plan view of components in the inside of the muffler 19, and therefore, does not illustrate a cross-section sectioned along a single plane. The muffler 19 includes an outer pipe 31, an inner exhaust pipe 32, a catalyst 33 and an outlet pipe 34. As illustrated in FIG. 1, the muffler 19 further includes a first muffler cover 35 and a second muffler cover 36. The first and second muffler covers 35 and 36 are made of resin. The first muffler cover 35 is attached to the outer peripheral surface of the outer pipe 31. The second muffler cover 36 is attached to a rear surface 311 of the outer pipe 31. It should be noted that FIGS. 2 and 3 omit illustration of the first and second muffler covers 35 and 36.

The outer pipe 31 accommodates the inner exhaust pipe 32. The outer pipe 31 includes a first opening portion 41, a main body pipe portion 42 and a circular cone portion 43. The first opening portion 41 is formed in the front end portion of the outer pipe 31. The first opening portion 41 receives an upstream side end portion of the inner exhaust pipe 32 connected thereto. Further, the first opening portion 41 receives a downstream side end portion of the outer exhaust pipe 18 connected thereto. The outer exhaust pipe 18 connects the engine 11 and the first opening portion 41. The inner exhaust pipe 32 is connected to the outer exhaust pipe 18 through the first opening portion 41. It should be noted in the explanation of FIGS. 2 and 3 of the present exemplary embodiment that a rightward direction in FIG. 2, i.e., a direction towards the first opening portion 41 from the inside of the main body pipe portion 42 along the center axis of the muffler 19 (i.e., a center axis Ax1 of the main body pipe portion 42) is defined as "a forward direction" whereas a leftward direction in FIG. 2, i.e., a direction opposite to the forward direction is defined as "a rearward direction". It should be also noted in the explanation of FIGS. 2 and 3 of the present exemplary embodiment that upward and downward directions respectively mean directions arranged where the center axis Ax1 of the main body pipe portion 42 is horizontally arranged.

The main body pipe portion 42 has a cylindrical shape. The main body pipe portion 42 is extended in a predetermined first direction. In the present exemplary embodiment, the first direction is a synonym of the rearward direction. Therefore, the main body pipe portion 42 is extended rearwards. The main body pipe portion 42 includes an inner pipe portion 44 and an outer pipe portion 45. The inner pipe portion 44 is disposed inside the outer pipe portion 45. A heat insulator 46 is disposed between the inner pipe portion 44 and the outer pipe portion 45.

The circular cone portion 43 has a shape with a diameter increased downstream. In other words, the circular cone portion 43 has a shape with a backwardly increased diameter. The circular cone portion 43 has a shape with the diameter reduced towards the first opening portion 41. The circular cone portion 43 is disposed between the first opening portion 41 and the main body pipe portion 42. The circular cone portion 43 and the first opening portion 41 are disposed concentrically to each other. The main body pipe portion 42 is disposed concentrically to the circular cone portion 43 and the first opening portion 41.

The outer pipe 31 further includes a second opening portion 47. The second opening portion 47 is disposed backwardly away from the first opening portion 41. The second opening portion 47 is positioned higher than the center axis Ax1 of the main body pipe portion 42. The second opening portion 47 is formed in the rear surface 311 of the outer pipe 31.

The inner exhaust pipe 32 accommodates the catalyst 33. The catalyst 33 is of a three-way catalyst type using, for instance, platinum, palladium and rhodium. To reliably produce a large exhaust path length, the inner exhaust pipe 32 has a shape bent at a plurality of positions. Specifically, the inner exhaust pipe 32 includes a first pipe portion 51, a second pipe portion 52, a third pipe portion 53 and a fourth pipe portion 54.

The first pipe portion 51 accommodates the catalyst 33. The first pipe portion 51 is extended from the first opening portion 41 in a second direction. The second direction is slanted with respect to the first direction. The second direction is slanted with respect to the center axis of the first opening portion 41. Therefore, a center axis Ax2 of the first pipe portion 51 is slanted with respect to the center axis Ax1 of the main body pipe portion 42. Specifically, the center axis Ax2 of the first pipe portion 51 is extended rearwards and obliquely downwards. The outer diameter of the first pipe portion 51 is greater than that of the second pipe portion 52. Further, the inner diameter of the first pipe portion 51 is greater than that of the first opening portion 41. The first pipe portion 51 is partially disposed inside the circular cone portion 43. Specifically, the front portion of the first pipe portion 51 is disposed inside the circular cone portion 43. The rear portion of the first pipe portion 51 is disposed inside the main body pipe portion 42. An extension of the center axis of the first opening portion 41 is overlapped with the catalyst 33. In other words, the center axis Ax1 of the main body pipe portion 42 is overlapped with the catalyst 33.

The second pipe portion 52 is backwardly extended from the rear end portion of the first pipe portion 51. A center axis Ax3 of the second pipe portion 52 is arranged in parallel to the center axis Ax1 of the main body pipe portion 42. The center axis Ax3 of the second pipe portion 52 is disposed lower than the center axis Ax1 of the main body pipe portion 42. The second pipe portion 52 is entirely disposed lower than the center axis Ax1 of the main body pipe portion 42. The second pipe portion 52 is disposed inside the main body pipe portion 42.

The third pipe portion 53 has a shape bent in a U-shape towards the first opening portion 41 from the second pipe portion 52. The third pipe portion 53 includes an upstream side end portion 531 and a downstream side end portion 532. The upstream side end portion 531 is connected to the rear end portion of the second pipe portion 52. The downstream side end portion 532 is connected to the rear end portion of the fourth pipe portion 54. The third pipe portion 53 is disposed inside the main body pipe portion 42.

The fourth pipe portion 54 is forwardly extended from the third pipe portion 53. A center axis Ax4 of the fourth pipe portion 54 is arranged in parallel to the center axis Ax1 of the main body pipe portion 42. The center axis Ax4 of the fourth pipe portion 54 is positioned higher than the center axis Ax1 of the main body pipe portion 42. The fourth pipe portion 54 is disposed higher than the second pipe portion 52. The fourth pipe portion 54 is disposed inside the main body pipe portion 42. As illustrated in FIG. 3, the fourth pipe portion 54 is positioned laterally to the center axis Ax1 of the main body pipe portion 42. The tip of the fourth pipe portion 54 is not overlapped with the catalyst 33 seen in a direction perpendicular to the first direction. In other words, the front end of the fourth pipe portion 54 is not overlapped with the catalyst 33 seen from the top side. Further, in other words, the front end of the fourth pipe portion 54 is positioned rearwards of the rear end of the catalyst 33.

In a side view of the muffler 19, a conceptual extended line L1 forwardly extended from the fourth pipe portion 54 intersects with the catalyst 33. Specifically, the conceptual extended line L1 of the bottom portion of the fourth pipe portion 54 intersects with the catalyst 33. The tip of the fourth pipe portion 54 is plugged with a plug portion 55. Further, the lateral surface of the fourth pipe portion 54 includes apertures 56. It should be noted in FIG. 2 that the reference numeral 56 is assigned to only one of the plural apertures. Within the main body pipe portion 42, the second pipe portion 52 and the fourth pipe portion 54 are supported by a support member 57.

The outlet pipe 34 is inserted into the second opening portion 47. The outlet pipe 34 includes a first end portion 58 and a second end portion 59. The first end portion 58 is disposed inside the outer pipe 31. The first end portion 58 is disposed rearwards of the fourth pipe portion 54. The first end portion 58 is disposed rearwards of the third pipe portion 53. The first end portion 58 is positioned higher than the center axis Ax1 of the main body pipe portion 42. The first end portion 58 has a shape with a diameter increased upstream. A center axis Ax5 of the outlet pipe 34 is slanted with respect to the center axis Ax1 of the main body pipe portion 42. Specifically, the center axis Ax5 of the outlet pipe 34 is extended rearwards and obliquely downwards. The outlet pipe 34 is disposed for passing through the inside of the second muffler cover 36. An inner cover 360 is disposed within the second muffler cover 36. The outlet pipe 34 is disposed for passing through the inside of the inner cover 360. The second end portion 59 is backwardly protruded from an opening 361 of the inner cover 360. The second end portion 59 is disposed for overlapping with the center axis Ax1 of the main body pipe portion 42.

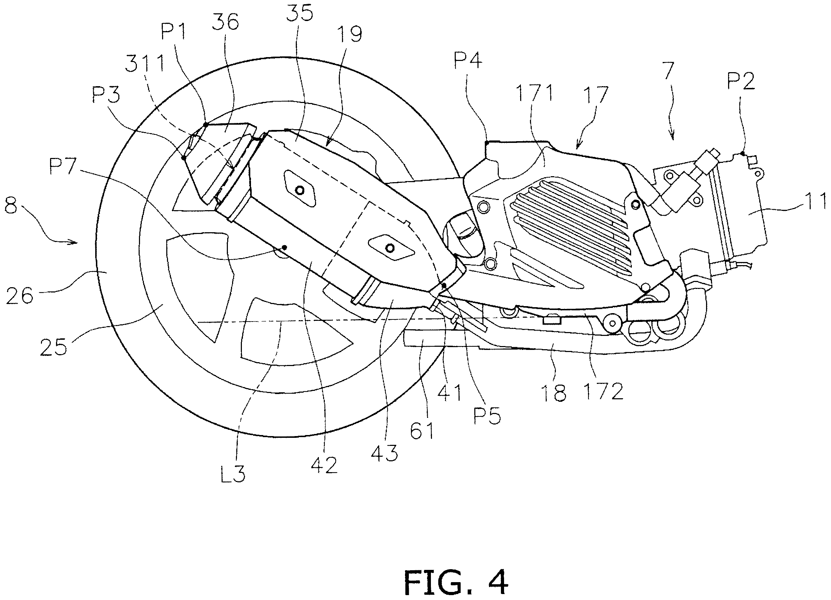

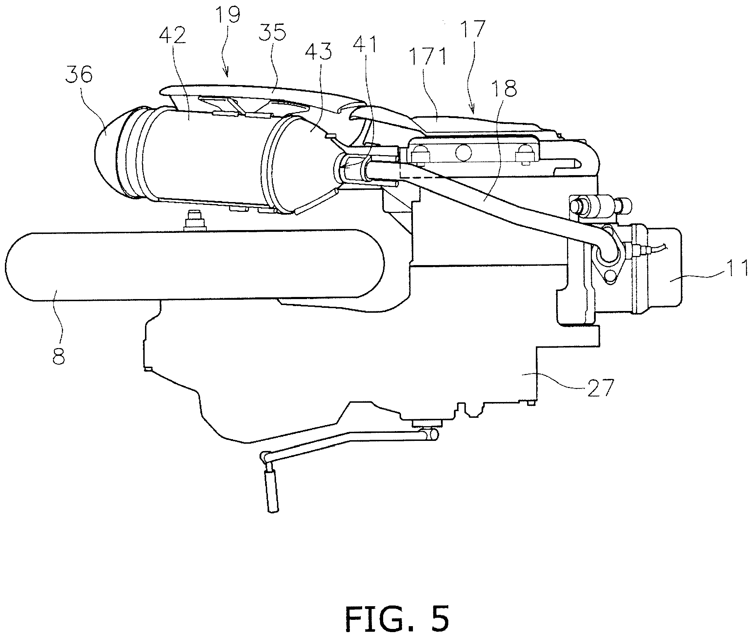

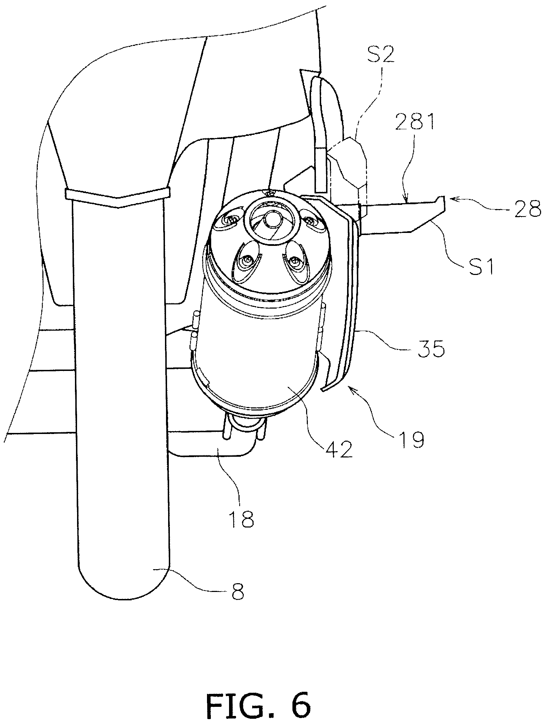

Next, the arrangement of the muffler 19 in the saddle-ride type vehicle 1 will be explained. FIG. 4 is a side view of a portion of the saddle-ride type vehicle 1. FIG. 5 is a plan view of a portion of the saddle-ride type vehicle 1 seen from the bottom side. FIG. 6 is a rear view of a portion of the saddle-ride type vehicle 1. As illustrated in FIG. 4, the saddle-ride type vehicle 1 further includes a foldable type vehicle stand 61. The vehicle stand 61 is disposed while the posture thereof can be changed between a deployed state and a retracted state. In the retracted state, the vehicle stand 61 is positioned higher than the bottom portion of the rear wheel 8. The vehicle stand 61 is disposed under the engine 11. The aforementioned radiator 17 is disposed over the vehicle stand 61. It should be noted in FIG. 4 that the vehicle stand 61 is set to be in the retracted state. In other words, FIG. 4 illustrates a posture of the engine unit 7 where the vehicle stand 61 is set to be in the retracted state.

As illustrated in FIG. 4, a top end P1 of the muffler 19 is positioned higher than a top end P2 of the engine 11 in a vehicle side view. A rear end P3 of the muffler 19 is positioned higher than the top end P2 of the engine 11. The top end P2 of the engine 11 herein means the top ends of engine-related cases including a crankcase, a cylinder block, a cylinder head, a cylinder cover and etc. Subordinate devices attached to the cases are not herein considered as the top end P2.

As illustrated in FIG. 4, the radiator 17 includes a radiator cover 171 and a radiator main body 172. In a vehicle side view, the top end P1 of the muffler 19 is positioned higher than a top end P4 of the radiator cover 171. In a vehicle side view, the rear end P3 of the muffler 19 is overlapped with the rear wheel 8. In a vehicle side view, the top end P1 of the muffler 19 is overlapped with the rear wheel 8. A front end P5 of the muffler 19 is positioned higher than a conceptual extended line L3 of the bottom surface of the radiator main body 172. The conceptual extended line L3 extends within a plane defined by the bottom surface of the radiator main body 172.

As illustrated in FIG. 5, the muffler 19 is disposed rearwards of the radiator 17 in a plan view. In a plan view, the muffler 19 is partially disposed inwards of the radiator 17 in the vehicle transverse direction. Specifically, the inner lateral end of the main body pipe portion 42 is disposed inwards of the radiator 17 in the vehicle transverse direction. It should be noted that a transmission 27 is disposed laterally to the engine 11.

As illustrated in FIGS. 1 and 6, the saddle-ride type vehicle 1 includes a foldable tandem footrest 28. As illustrated in FIG. 6, the tandem footrest 28 is disposed while the posture thereof can be changed between a deployed state S1 and a retracted state S2. The tandem footrest 28 is positioned outwards of the radiator 17 in the vehicle transverse direction. The tandem footrest 28 includes a footrest surface 281 on the top surface thereof for allowing a tandem rider to put his/her foot thereon. When the tandem footrest 28 is set to be in the deployed state S1, the outer lateral end of the muffler 19 is positioned inwards of the inner lateral end of the footrest surface 281 of the tandem footrest 28 in the vehicle transverse direction. Specifically, when the tandem footrest 28 is set to be in the deployed state S1, the outer lateral end of the main body pipe portion 42 is positioned inwards of the inner lateral end of the footrest surface 281 of the tandem footrest 28 in vehicle the transverse direction. When the tandem footrest 28 is set to be in the deployed state S1, the outer lateral end of the first muffler cover 35 is positioned inwards of the inner lateral end of the footrest surface 281 of the tandem footrest 28 in the vehicle transverse direction.

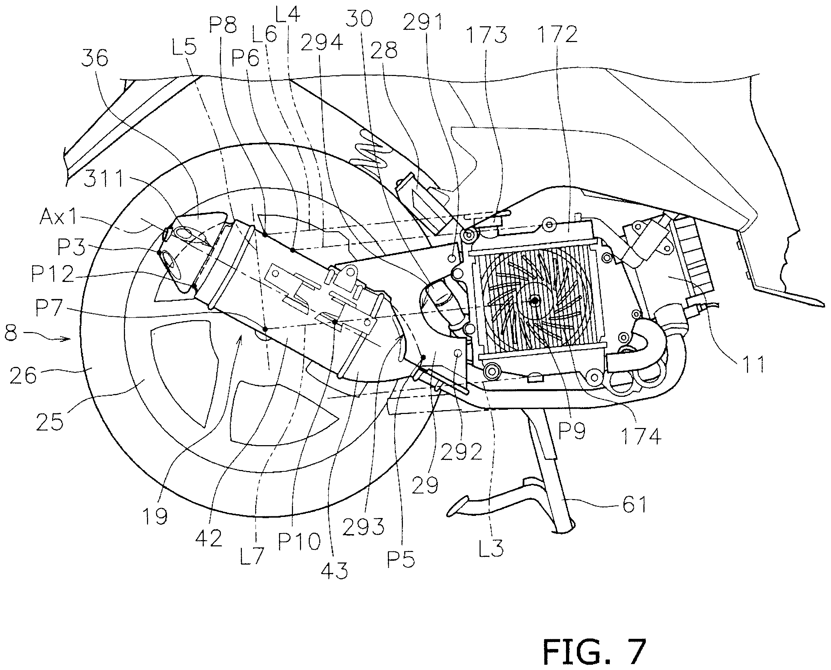

FIG. 7 is a side view of a portion of the saddle-ride type vehicle 1 where the vehicle stand 61 is set to be in the deployed state. In the deployed state, the bottom end of the vehicle stand 61 is positioned lower than the bottom of the rear wheel 8. In the deployed state, the vehicle stand 61 supports the saddle-ride type vehicle 1. It should be noted that FIG. 7 omits illustration of the radiator cover 171 and the first muffler cover 35 for easy understanding. As illustrated in FIG. 7, the radiator 17 includes a radiator cap 173 and a radiator fan 174. The radiator cap 173 is attached to the top surface of the radiator main body 172. The radiator fan 174 is disposed laterally to the radiator main body 172.

As illustrated in FIG. 7, the engine unit 7 further includes a bracket 29. The bracket 29 is attached to the engine 11. Specifically, the bracket 29 includes a first fixation portion 291 and a second fixation portion 292. The first and second fixation portions 291 and 292 are formed in the front end portions of the bracket 29. The bracket 29 is fixed at the first and second fixation portions 291 and 292 to the engine 11. Further, a rear edge portion 293 of the bracket 29 is fixed to the muffler 19. The rear edge portion 293 of the bracket 29 is welded to the circular cone portion 43 and the main body pipe portion 42 of the muffler 19. Accordingly, the muffler 19 is supported by the bracket 29 in a cantilevered state. In other words, the bracket 29 supports one end of the muffler 19 without supporting the other end of the muffler 19. Further, the bracket 29 includes a recessed portion 294. The recessed portion 294 is disposed between the first fixation portion 291 and the second fixation portion 292. An oil level gauge 30 is attached to the engine 11 while being allowed to be accessed through the recessed portion 294. The oil level gauge 30 is a member for checking the oil level of the engine 11. The oil level gauge 30 is disposed rearwards of the radiator 17.

The center axis Ax1 of the main body pipe portion 42 is extended rearwards and obliquely upwards. In a vehicle side view, an intersection P6 between the muffler 19 (i.e. outer surface of the muffler) and a conceptual extended line L4 of the top surface of the radiator main body 172 is positioned forwards of a conceptual vertical line L5. The conceptual extended line L4 extends within a plane defined by the top surface of the radiator main body 172. The conceptual vertical line L5 extends within a vertical plane that also contains the rotary axis of the rear wheel 8. The conceptual vertical line L5 is a conceptual line that is arranged perpendicularly to the conceptual extended line L4 while passing through a rotary center P7 of the rear wheel 8. In a vehicle side view, an intersection P8 between the muffler 19 and a conceptual extended line L6 of the top surface of the radiator cap 173 is positioned forwards of the conceptual vertical line L5. The conceptual extended line L6 extends within a plane defined by the top surface of the radiator cap 173. In the embodiment the conceptual extended lines L4 and L6 are parallel with each other. In a vehicle side view, an intersection P10 between a conceptual line L7 and the center axis Ax1 of the main body pipe portion 42 is positioned forwards of the rotary center P7 of the rear wheel 8. The conceptual line L7 is a conceptual line connecting a rotary center P9 of the radiator fan 174 and the rotary center P7 of the rear wheel 8. In the embodiment the conceptual extended lines L4, L6 and L7 are parallel with each other. The conceptual line L7 is perpendicular to the conceptual vertical line L5.

In FIG. 7, the rear end P3 of the muffler 19 is also overlapped with the rear wheel 8 in a vehicle side view. The rear end P3 of the muffler 19 is positioned rearwards of the conceptual vertical line L5 while being positioned higher than a conceptual parallel line (corresponding to the conceptual line L7 in the present exemplary embodiment) that is arranged in parallel to the conceptual extended line L4 while passing through the rotary center P7 of the rear wheel 8. It should be noted that the rear end P3 of the muffler 19 means the rear end of the second muffler cover 36. Further in a vehicle side view, a rear end P12 of the outer pipe 31 is positioned radially inside the inner peripheral surface of the rim 25. The rear surface 311 of the outer pipe 31 is entirely positioned radially inside the inner peripheral surface of the rim 25.

The front end P5 of the muffler 19 is positioned higher than the bottom end of the radiator 17. In a vehicle side view, the front end P5 of the muffler 19 is disposed under the oil level gauge 30. The front end P5 of the muffler 19 is positioned higher than the conceptual extended line L3 of the bottom surface of the radiator main body 172. In a vehicle side view, the circular cone portion 43 is positioned rearwards of the oil level gauge 30. In a vehicle side view, the circular cone portion 43 is disposed over the vehicle stand 61 set to be in a folded state, i.e., the retracted state.

In the saddle-ride type vehicle 1 according to the present exemplary embodiment, the front end P5 of the muffler 19 is positioned higher than the conceptual extended line L3 of the bottom surface of the radiator main body 172. Further, the rear end P3 of the muffler 19 is overlapped with the rear wheel 8 in a vehicle side view. Therefore, the muffler 19 is disposed while being slanted with respect to the horizontal direction at an angle steeper than that of a well-known muffler. Accordingly, distance is reduced between the rear end P3 of the muffler 19 and the pivot center of the engine unit 7. Therefore, load acting on the support structure of the engine unit 7 is reduced. As a result, it is possible to inhibit increase in size of the engine unit 7. It should be noted that the bank angle of the saddle-ride type vehicle 1 may be reduced when the front end P5 of the muffler 19 is positioned low in disposing the muffler 19 in a slanted state at an angle steeper than that of a well-known muffler. However, the saddle-ride type vehicle 1 according to the present embodiment can inhibit reduction in the bank angle due to the structure that the front end P5 of the muffler 19 is positioned higher than the conceptual extended line L3 of the bottom surface of the radiator main body 172. In the embodiment the conceptual extended lines L3 and L4 are parallel with each other.

In a vehicle side view, the intersection P8 between the muffler 19 and the conceptual extended line L6 of the top surface of the radiator cap 173 is positioned forwards of the conceptual vertical line L5. Therefore, the muffler 19 is disposed while being slanted with respect to the horizontal direction at an angle steeper than that of a well-known muffler.

In a vehicle side view, the rear end P3 of the muffler 19 is positioned rearwards of the conceptual vertical line L5 while being positioned higher than the conceptual parallel line L7. Therefore, the rear end P3 of the muffler 19 is disposed forwards of a well-known position thereof.

In a vehicle side view, the rear end P12 of the outer pipe 31 is positioned radially inside the inner peripheral surface of the rim 25. Therefore, the rear end P12 of the outer pipe 31 is disposed forwards of a well-known position thereof.

In a vehicle side view, the intersection P10 between the conceptual line L7 and the center axis Ax1 of the main body pipe portion 42 is positioned forwards of the rotary center P7 of the rear wheel 8. Therefore, the muffler 19 is disposed while being slanted with respect to the horizontal direction at an angle steeper than that of a well-known muffler.

In a vehicle side view, the rear end P3 of the muffler 19 is positioned higher than the top end P2 of the engine 11. Therefore, the muffler 19 is disposed while being slanted with respect to the horizontal direction at an angle steeper than that of a well-known muffler.

The outer lateral end of the muffler 19 is positioned inwards of the inner lateral end of the footrest surface 281 of the tandem footrest 28 of the deployed state in the vehicle transverse direction. Therefore, the muffler 19 can be inhibited from protruding in the vehicle transverse direction. It is thereby possible to easily achieve sufficient support strength of the muffler 19.

In a vehicle side view, the front end P5 of the muffler 19 is disposed under the oil level gauge 30. Therefore, degradation in accessibility to the oil level gauge 30 can be inhibited while flexibility in arrangement of the muffler 19 can be enhanced.

In a vehicle side view, the circular cone portion 43 is positioned rearwards of the oil level gauge 30. Therefore, the muffler 19 can be disposed closer to the oil level gauge 30 while degradation in accessibility to the oil level gauge 30 can be inhibited.

In a vehicle side view, the circular cone portion 43 is disposed over the vehicle stand 61 of the folded state. Therefore, the muffler 19 can be inhibited from interfering with actions of the vehicle stand 61 while flexibility in arrangement of the muffler 19 can be enhanced.

The front end P5 of the muffler 19 is positioned higher than the bottom end of the radiator 17. Therefore, reduction in the bank angle can be inhibited.

An exemplary embodiment of the present teaching has been described above. However, the present invention is not limited to the aforementioned exemplary embodiment, and a variety of changes can be herein made without departing from the scope of the present teaching.

The saddle-ride type vehicle 1 includes a motorcycle, an all-terrain vehicle and a snowmobile. Further, the motorcycle includes a scooter and a moped.

The inner structure of the muffler 19 may be changed from that described in the aforementioned exemplary embodiment.

The position of the front end P5 of the muffler 19 is not limited to that described in the aforementioned exemplary embodiment. The front end P5 of the muffler 19 is only required to be at least positioned higher than the conceptual extended line L3 of the bottom surface of the radiator main body 172, and the other arrangements may be changed.

The position of the rear end P3 of the muffler 19 is not limited to that described in the aforementioned exemplary embodiment. The rear end P3 of the muffler 19 is only required to be at least positioned for overlapping with the rear wheel 8 in a vehicle side view, and the other arrangements may be changed.

The positions of a variety of conceptual lines or a variety of intersections of the aforementioned exemplary embodiment are not limited to those described in the aforementioned exemplary embodiment. It should be noted that the positions of the conceptual lines or the intersections are defined based on the positional relations between the slant angle of the muffler 19 and the radiator 17, the engine 11 or the other members. Therefore, the aforementioned positions of the conceptual lines or the intersections are preferable for inhibiting size increase of the engine unit 7 of the engine 11 by disposing the muffler 19 at an angle steeper than that of a well-known muffler.

### Industrial Applicability

According to the present teaching, size increase of an engine unit can be inhibited in a saddle-ride type vehicle equipped with a radiator disposed laterally to an engine.

### Reference Signs List

- 1: Saddle-ride type vehicle
- 2: Vehicle body frame
- 8: Rear wheel
- 11: Engine
- 17: Radiator
- 18: Outer exhaust pipe
- 19: Muffler
- 25: Rim
- 26: Tire
- 28: Tandem footrest
- 30: Oil level gauge
- 31: Outer pipe
- 32: Inner exhaust pipe
- 41: First opening portion
- 43: Circular cone portion
- 61: Vehicle stand
- 172: Radiator main body
- 173: Radiator cap
- 174: Radiator fan

## Claims

1. A saddle-ride type vehicle, comprising:
a vehicle body frame (2);
an engine (11) pivotably supported with respect to the vehicle body frame (2);
a radiator (17) disposed laterally to the engine (11), wherein the radiator (17) includes a radiator main body (172) and a radiator cap (173) attached to a top surface of the radiator main body (172);
an outer exhaust pipe (18) connected to the engine (11), wherein the outer exhaust pipe (18) is backwardly extended from the engine (11);
a muffler (19) disposed rearwards of the radiator (17), wherein the muffler (19) includes an inner exhaust pipe (32) connected to the outer exhaust pipe (18), and an outer pipe (31) accommodating the inner exhaust pipe (32); and
a rear wheel (8) disposed behind the engine (11), wherein the rear wheel (8) includes a tire (26) and a rim (25) fitted with the tire (26),
wherein an intersection (P6) between the muffler (19) and a conceptual extended line (L4) of the top surface of the radiator main body (172) is positioned forwards of a conceptual vertical line (L5) in a vehicle side view, the conceptual vertical line (L5) is passing through a rotary center (P7) of the rear wheel (8), the conceptual vertical line (L5) is arranged perpendicularly to the conceptual extended line (L4),
wherein a front end (P5) of the muffler (19) is positioned higher than a conceptual extended line (L3) of a bottom surface of the radiator main body (172), and
wherein a center axis (Ax1) of a main body pipe portion (42) of the muffler (19) is extended rearwards and obliquely upwards,
**characterized in that**
a rear end (P3) of the muffler (19) is overlapped with the rear wheel (8) in a vehicle side view, and
a rear end (P12) of the outer pipe (31) is positioned radially inside an inner peripheral surface of the rim (25) in a vehicle side view.

2. A saddle-ride type vehicle according to claim 1, wherein an intersection (P8) between the muffler (19) and a conceptual extended line (L6) of a top surface of the radiator cap (173) is positioned forwards of the conceptual vertical line (L5) in a vehicle side view.

3. A saddle-ride type vehicle according to one of claims 1 and 2, wherein the rear end (P3) of the muffler (19) is positioned rearwards of the conceptual vertical line (L5) while being positioned higher than a conceptual parallel line (L7) in a vehicle side view, the conceptual parallel line (L7) is passing through the rotary center (P7) of the rear wheel (8), and the conceptual parallel line (L7) is arranged in parallel to the conceptual extended line (L4).

4. A saddle-ride type vehicle according to one of claims 1 to 3, wherein the radiator (17) includes a radiator fan (174), and an intersection (P10) between a center axis (Ax1) of the muffler (19) and a conceptual line (L7) connecting a rotary center (P9) of the radiator fan (174) and the rotary center (P7) of the rear wheel (8) is positioned forwards of the rotary center of the rear wheel (8) in a vehicle side view.

5. A saddle-ride type vehicle according to one of claims 1 to 4, wherein the rear end (P3) of the muffler (19) is positioned higher than a top end (P2) of the engine (11) in a vehicle side view.

6. A saddle-ride type vehicle according to one of claims 1 to 5, **characterized by** a tandem footrest (28) disposed for changing a posture thereof between a deployed state (S1) and a retracted state (S2),
wherein the tandem footrest (28) is positioned outwards of the radiator (17) in a vehicle transverse direction, and
wherein an outer lateral end of the muffler (19) is positioned inwards of an inner lateral end of a footrest surface (281) of the tandem footrest (28) of the deployed state (S1) in the vehicle transverse direction.

7. A saddle-ride type vehicle according to one of claims 1 to 6, **characterized by** an oil level gauge (30) for checking an oil level of the engine (11), the oil level gauge (30) disposed behind the radiator (17) in a vehicle side view, wherein the front end of the muffler (19) is disposed under the oil level gauge (30) in a vehicle side view.

8. A saddle-ride type vehicle according to claim 7, wherein the muffler (19) includes an opening portion (41) receiving the outer exhaust pipe (18) connected thereto, and a circular cone portion (43) having a shape with a diameter reduced towards the opening portion, and
wherein the circular cone portion (43) is positioned behind the oil level gauge (30) in a vehicle side view.

9. A saddle-ride type vehicle according to claim 8, **characterized by** a foldable type vehicle stand (61) disposed under the engine (11), wherein the circular cone portion (43) is disposed over the vehicle stand (61) of a folded state in a vehicle side view.

10. A saddle-ride type vehicle according to one of claims 1 to 9, wherein the front end (P5) of the muffler (19) is positioned higher than the bottom end of the radiator (17).

11. A saddle-ride type vehicle according to one of claims 1 to 10, wherein the muffler (19) is supported by the engine (11).

## Patentansprüche

1. Fahrzeug mit Sattel, umfassend:
einen Fahrzeugkarosserierahmen (2);
einen Motor (11), der schwenkbar bezüglich des Fahrzeugkarosserierahmens (2) gelagert ist;
einen Kühler (17), der seitlich an dem Motor (11) angeordnet ist, wobei der Kühler (17) einen Kühlerhauptkörper (172) und eine Kühlerkappe (173) beinhaltet, die an einer Oberseite des Kühlerhauptkörpers (172) befestigt ist;
ein äußeres Abgasrohr (18), das mit dem Motor (11) verbunden ist, wobei sich das äußere Abgasrohr (18) von dem Motor (11) nach hinten erstreckt;
einen Schalldämpfer (19), der hinter dem Kühler (17) angeordnet ist, wobei der Schalldämpfer (19) ein inneres Abgasrohr (32) beinhaltet, das mit dem äußeren Abgasrohr (18) verbunden ist, und ein äußeres Rohr (31), in dem das innere Abgasrohr (32) angeordnet ist; und
ein Hinterrad (8), das hinter dem Motor (11) angeordnet ist, wobei das Hinterrad (8) einen Reifen (26) und eine Felge (25) beinhaltet, die mit dem Reifen (26) zusammengefügt ist,
wobei eine Schnittstelle (P6) zwischen dem Schalldämpfer (19) und einer gedachten Verlängerungslinie (L4) der Oberseite des Kühlerhauptkörpers (172) vor einer gedachten vertikalen Linie (L5) in einer Seitenansicht des Fahrzeugs positioniert ist, wobei die gedachte vertikale Linie (L5) durch einen Drehmittelpunkt (P7) des Hinterrades (8) verläuft, wobei die gedachte vertikale Linie (L5) lotrecht zu der gedachten Verlängerungslinie (L4) verläuft,
wobei ein Vorderende (P5) des Schalldämpfers (19) höher als eine gedachte Verlängerungslinie (L3) einer Bodenfläche des Kühlerhauptkörpers (172) positioniert ist, und
wobei sich eine Mittelachse (Ax1) des Hauptkörper-Rohrabschnitts (42) des Schalldämpfers (19) nach hinten und schräg nach oben erstreckt,
**dadurch gekennzeichnet, dass**
ein hinteres Ende (P3) des Schalldämpfers (19) das Hinterrad (8) in einer Fahrzeugseitenansicht überlappt, und
ein hinteres Ende (P12) des äußeren Rohrs (31) radial innerhalb einer Innenumfangsfläche der Felge (25) in einer Fahrzeugseitenansicht positioniert ist.

2. Fahrzeug mit Sattel nach Anspruch 1, wobei eine Schnittstelle (P8) zwischen dem Schalldämpfer (19) und einer gedachten Verlängerungslinie (L6) einer Oberseite der Kühlerkappe (173) vor der gedachten vertikalen Linie (L5) in einer Fahrzeugseitenansicht positioniert ist.

3. Fahrzeug mit Sattel nach einem der Ansprüche 1 und 2, wobei das hintere Ende (P3) des Schalldämpfers (19) hinter der gedachten vertikalen Linie (L5) positioniert ist, während es gleichzeitig höher als eine gedachte parallele Linie (L7) in einer Fahrzeugseitenansicht positioniert ist, wobei die gedachte parallele Linie (L7) durch den Drehmittelpunkt (P7) des Hinterrades verläuft, und die gedachte parallele Linie (L7) parallel zu der gedachten Verlängerungslinie (L4) angeordnet ist.

4. Fahrzeug mit Sattel nach einem der Ansprüche 1 bis 3, wobei der Kühler (17) einen Kühlerlüfter (174) beinhaltet, und eine Schnittstelle (P10) zwischen einer Mittelachse (Ax1) des Schalldämpfers (19) und einer gedachten Linie (L7), welche einen Drehmittelpunkt (P9) des Kühlerlüfters (174) und den Drehmittelpunkt (P7) des Hinterrades (8) verbindet, vor dem Drehmittelpunkt des Hinterrades (8) in einer Fahrzeugseitenansicht positioniert ist.

5. Fahrzeug mit Sattel nach einem der Ansprüche 1 bis 4, wobei das hintere Ende (P3) des Schalldämpfers (19) höher als ein oberes Ende (P2) des Motors (11) in einer Fahrzeugseitenansicht positioniert ist.

6. Fahrzeug mit Sattel nach einem der Ansprüche 1 bis 5, **dadurch gekennzeichnet, dass** eine Tandem-Fußstütze (28) zum Ändern ihrer Stellung zwischen einem Verwendungszustand (S1) und einem eingeklappten Zustand (S2) angeordnet ist,
wobei die Tandem-Fußstütze (28) außerhalb des Kühlers (17) in einer Fahrzeug-Querrichtung positioniert ist, und
wobei ein äußeres laterales Ende des Schalldämpfers (19) innerhalb eines inneren lateralen Endes einer Fußstützenoberfläche (281) der Tandem-Fußstütze (28) im Verwendungszustand (S1) in der Fahrzeug-Querrichtung positioniert ist.

7. Fahrzeug mit Sattel nach einem der Ansprüche 1 bis 6, **gekennzeichnet durch** einen Ölmessstab (30) zum Prüfen eines Ölstands des Motors (11), wobei der Ölmessstab (30) hinter dem Kühler (17) in einer Fahrzeugseitenansicht angeordnet ist, wobei das Vorderende des Schalldämpfers (19) unter dem Ölmessstab (30) in einer Fahrzeugseitenansicht angeordnet ist.

8. Fahrzeug mit Sattel nach Anspruch 7, wobei der Schalldämpfer (19) einen Öffnungsabschnitt (41) aufweist, um das damit verbundene äußere Abgasrohr (18) aufzunehmen, und einen runden Kegelabschnitt (43) mit einer Form, bei der ein Durchmesser in Richtung des Öffnungsabschnitts kleiner wird, und
wobei der runde Kegelabschnitt (43) hinter dem Ölmessstab (30) in einer Fahrzeugseitenansicht positioniert ist.

9. Fahrzeug mit Sattel nach Anspruch 8, **gekennzeichnet durch** einen klappbaren Fahrzeugständer (61), der unter dem Motor (11) angeordnet ist, wobei der runde Kegelabschnitt (43) über dem Fahrzeugständer (61) in einem eingeklappten Zustand in einer Fahrzeugseitenansicht angeordnet ist.

10. Fahrzeug mit Sattel nach einem der Ansprüche 1 bis 9, wobei das Vorderende (P5) des Schalldämpfers (19) höher als das untere Ende des Kühlers (17) positioniert ist.

11. Fahrzeug mit Sattel nach einem der Ansprüche 1 bis 10, wobei der Schalldämpfer (19) von dem Motor (11) getragen wird.

## Revendications

1. Véhicule de type à selle, comprenant :
un cadre de carrosserie de véhicule (2) ;
un moteur (11) supporté de manière pivotante par rapport au cadre de carrosserie de véhicule (2) ;
un radiateur (17) disposé latéralement par rapport au moteur (11), dans lequel le radiateur (17) comprend un corps principal de radiateur (172) et un bouchon de radiateur (173) fixé à une surface supérieure du corps principal de radiateur (172) ;
un tuyau d'échappement externe (18) relié au moteur (11), dans lequel le tuyau d'échappement externe (18) est étendu vers l'arrière à partir du moteur (11);
un pot d'échappement (19) disposé à l'arrière du radiateur (17), dans lequel le pot d'échappement (19) comprenant un tuyau d'échappement interne (32) relié au tuyau d'échappement externe (18), et un tuyau externe (31) recevant le tuyau d'échappement interne (32) ; et
une roue arrière (8) disposée derrière le moteur (11), dans lequel la roue arrière (8) comprend un pneumatique (26) et une jante (25) équipée du pneumatique (26),
dans lequel une intersection (P6) entre le pot d'échappement (19) et une ligne étendue conceptuelle (L4) de la surface supérieure du corps principal de radiateur (172) est positionnée en avant d'une ligne verticale conceptuelle (L5) dans une vue latérale de véhicule, la ligne verticale conceptuelle (L5) passe à travers un centre de rotation (P7) de la roue arrière (8), la ligne verticale conceptuelle (L5) est agencée perpendiculairement à la ligne étendue conceptuelle (L4),
dans lequel une extrémité avant (P5) du pot d'échappement (19) est positionnée plus haut qu'une ligne étendue conceptuelle (L3) d'une surface inférieure du corps principal de radiateur (172), et
dans lequel un axe central (Ax1) d'une partie de tuyau de corps principal (42) du pot d'échappement (19) est étendue vers l'arrière et obliquement vers le haut,
**caractérisé en ce que**
une extrémité arrière (P3) du pot d'échappement (19) est en chevauchement avec la roue arrière (8) dans une vue latérale du véhicule, et
une extrémité arrière (P12) du tuyau externe (31) est positionnée radialement à l'intérieur d'une surface périphérique interne de la jante (25) dans une vue latérale du véhicule.

2. Véhicule de type à selle selon la revendication 1, dans lequel une intersection (P8) entre le pot d'échappement (19) et une ligne étendue conceptuelle (L6) d'une surface supérieure du bouchon de radiateur (173) est positionnée en avant de la ligne verticale conceptuelle (L5) dans une vue latérale du véhicule.

3. Véhicule de type à selle selon l'une des revendications 1 et 2, dans lequel l'extrémité arrière (P3) du pot d'échappement (19) est positionnée à l'arrière de la ligne verticale conceptuelle (L5) tout en étant positionnée plus haut qu'une ligne parallèle conceptuelle (L7) dans une vue latérale du véhicule, la ligne parallèle conceptuelle (L7) passant par le centre de rotation (P7) de la roue arrière (8), et la ligne parallèle conceptuelle (L7) est agencée parallèlement à la ligne étendue conceptuelle (L4).

4. Véhicule de type à selle selon l'une des revendications 1 à 3, dans lequel le radiateur (17) comprend un ventilateur de radiateur (174), et une intersection (P10) entre un axe central (Ax1) du pot d'échappement (19) et une ligne conceptuelle (L7) connectant un centre de rotation (P9) du ventilateur de radiateur (174) et le centre de rotation (P7) de la roue arrière (8) est positionnée vers l'avant du centre de rotation de la roue arrière (8) dans une vue latérale du véhicule.

5. Véhicule de type à selle selon l'une des revendications 1 à 4, dans lequel l'extrémité arrière (P3) du pot d'échappement (19) est positionnée plus haut qu'une extrémité supérieure (P2) du moteur (11) dans une vue latérale du véhicule.

6. Véhicule de type à selle selon l'une des revendications 1 à 5, **caractérisé par** un repose-pied en tandem (28) disposé pour changer une posture de celui-ci entre un état déployé (S1) et un état rétracté (S2),
dans lequel le repose-pied en tandem (28) est positionné vers l'extérieur du radiateur (17) dans une direction transversale du véhicule, et
dans lequel une extrémité latérale externe du pot d'échappement (19) est positionnée vers l'intérieur d'une extrémité latérale interne d'une surface de repose-pied (281) du repose-pied en tandem (28) de l'état déployé (S1) dans la direction transversale du véhicule.

7. Véhicule de type à selle selon l'une des revendications 1 à 6, **caractérisé par** une jauge de niveau d'huile (30) pour vérifier un niveau d'huile du moteur (11), la jauge de niveau d'huile (30) disposée derrière le radiateur (17) dans une vue latérale du véhicule, dans lequel l'extrémité avant du pot d'échappement (19) est disposée sous la jauge de niveau d'huile (30) dans une vue latérale du véhicule.

8. Véhicule de type à selle selon la revendication 7, dans lequel le pot d'échappement (19) comprend une partie d'ouverture (41) recevant le tuyau d'échappement externe (18) relié à celle-ci, et une partie de cône circulaire (43) ayant une forme avec diamètre réduit vers la partie d'ouverture, et
dans lequel la partie de cône circulaire (43) est positionnée derrière la jauge de niveau d'huile (30) dans une vue latérale du véhicule.

9. Véhicule de type à selle selon la revendication 8, **caractérisé par** un support (61) de véhicule de type pliable disposé sous le moteur (11), dans lequel la partie conique circulaire (43) est disposée sur le support de véhicule (61) dans un état replié dans une vue latérale du véhicule.

10. Véhicule de type à selle selon l'une des revendications 1 à 9, dans lequel l'extrémité avant (P5) du pot d'échappement (19) est positionnée plus haut que l'extrémité inférieure du radiateur (17).

11. Véhicule de type à selle selon l'une des revendications 1 à 10, dans lequel le pot d'échappement (19) est supporté par le moteur (11).
